# EUROPEAN PATENT SPECIFICATION

(11) **EP 2 759 747 B1**
(45) Date of publication and mention of the grant of the patent: **07.07.2021**
(21) Application number: 13153005.7
(22) Date of filing: 29.01.2013
(51) Int. Cl.: F16K 5/04, F16K 11/085

(54) **Liquid valve**
Flüssigkeitsventil
Soupape de liquide

(43) Date of publication of application: 30.07.2014
(73) Proprietor: ESBE AB, 333 75 Reftele (SE)
(72) Inventor: Davidsson, Jonas, 331 51 VÄRNAMO (SE)
(74) Representative: AWA Sweden AB

(56) References cited:
- EP-A1- 0 095 343
- WO-A1-01/53731
- WO-A1-03/071172
- GB-A- 2 159 921
- US-A- 4 288 896
- US-A- 6 073 648
- None

## Description

### Technical Field

The present invention concerns a liquid valve comprising a housing, that defines a circular cylindrical valve chamber having at least two valve ports along a circumferential chamber wall, and a rotor, that is rotatably seated inside said valve chamber and comprises a peripheral arc portion able to sealingly contact the circumferential chamber wall and to totally block one of said valve ports at a time, wherein said rotor is seated in such a way inside said valve chamber that said arc portion is permanently biased into abutment against the circumferential chamber wall.

### Prior Art

A liquid valve according to the preamble is described in the published document WO 01/86179 A1. To be more specific, the liquid valve revealed in said document is a mixing valve that is used to regulate a flow of liquid in a pipe system. According to the document the bias of the rotor is accomplished by means of eccentrically arranged O-ring seats on the rotor cooperating with centrally arranged O-ring seats inside the housing. Said bias could of course also be brought about by the aid of other means as well. Anyhow, the bias improves tightness of the mixing valve, which is very useful in cases where one of said valve ports is to be blocked totally.

In practice it has shown that the rotor of the known mixing valve tends to get stuck if not rotated for a while. A contributory cause for that is believed to be that said bias tends to press all of the liquid, that is controlled by the mixing valve and hence fills the interior thereof and kind of lubes its walls, away from the wall-arc interface. Hence, a known way to remedy the problem is to rotate the rotor of the mixing valve from time to time according to a maintenance scheme irrespective of an actual need to alter the valve setting as such. In manually operated valves this obviously is not a very practical solution, and in automatically operated valves frequent operation involves added stress to the control devices used and to the mixing valve too.

### Object of the Invention

Against that background the object of the present invention is to improve a liquid valve according to the preamble in a way that allows prolonged stationary operating cycles without risk of the rotor of the liquid valve getting stuck and, thus, the liquid valve to malfunction.

### Summary of the Invention

According to the present invention, this object is achieved by a valve as defined by the independent claim. Said housing is made of a metal alloy, said rotor is made of a metal alloy, and said arc portion comprises means at least minimizing contact between microstructurally alike areas of said housing and said rotor.

Tests made by the applicant have shown that contact between alike metal alloys in both the housing and the rotor in a valve according to the preamble are a main cause for valve malfunction. The applicant believes this is due to some microstructural interaction between the metal alloys of the housing and the rotor, and further tests with solutions based upon that assumption have proven that the inventive concept of at least minimizing contact between microstructurally alike areas of said housing and said rotor does indeed mitigate the problem.

According to a preferred embodiment said means comprises a rotor made of a different metal alloy than said housing. Metallurgically different metal alloys have different microstructures, which the applicant believes makes meeting surfaces less prone to interact and thus the rotor less prone to getting stuck inside the housing.

Preferably the metal alloy of said rotor is harder than the metal alloy of said housing. Out of practical reasons this is the most convenient choice as the housing usually is initially cast, whereas the rotor can be machined starting from a drawn metal bar having a tighter microstructure even if made out of an identical metal alloy.

According to a preferred embodiment the metal alloy of the rotor is a first brass alloy and the metal alloy of the housing is a second brass alloy. Use of such related alloys is advantageous for instance out of galvanic reasons or in drinking water applications.

According to another embodiment the metal alloy of said rotor is a stainless steel alloy and the metal alloy of said housing is a brass alloy. Use of such extremely different metal alloys is possible thanks to the fact that the rotor in a mixing valve according to the preamble is seated in a biased way inside the housing, which means that there must be a certain bearing clearance.

According to another embodiment said means comprises a rotor covered by a hard coating. The person skilled in the art has knowledge of several applicable hard coatings, such as Nedox®. Nedox® coating involves chemical nickel-plating as well as fluoroplastic coating of metallic surfaces and results in hard, durable surfaces with low friction.

According to yet another embodiment said means comprises a rotor plated with a hard metal. Again, the person skilled in the art has knowledge of several applicable hard metals, such as chromium or titan.

According to a different approach to solve the problem at hand said rotor has an arc portion that is centrally recessed. By recessing only a central part of the arc portion the sealing function vis-à-vis the housing can be upheld by edge parts of the arc portion, said edge parts clearly having a smaller contact area with the housing than the whole arc portion without such a recess would have.

Preferably, in the latter embodiment said arc portion is centrally recessed in an arc shaped manner. This is preferred because such a recess is easy to accomplish by machining the rotor in a lathe, in which the rotor is chucked slightly eccentric, such that a recessed arc shape is created being eccentric in relation to the arc portion as such.

Alternatively, in said latter embodiment said arc portion is centrally recessed in a planar manner. This is advantageous because such a recess is easily made, this time by means of a milling machine used to simply cut a central part of said arc portion away.

### Brief Description of the Drawings

In the following a preferred embodiment of the liquid valve according to the invention is described with reference being had to the accompanying drawings, in which:
Fig. 1 shows a liquid valve in the form of a mixing valve in a perspective view with certain parts being broken away out of explanatory reasons;
Fig. 2 shows the mixing valve of fig. 1 in a sectional view; and
Fig. 3 shows a detail III of fig. 2 in an enlarged view.

### Description of a Preferred Embodiment

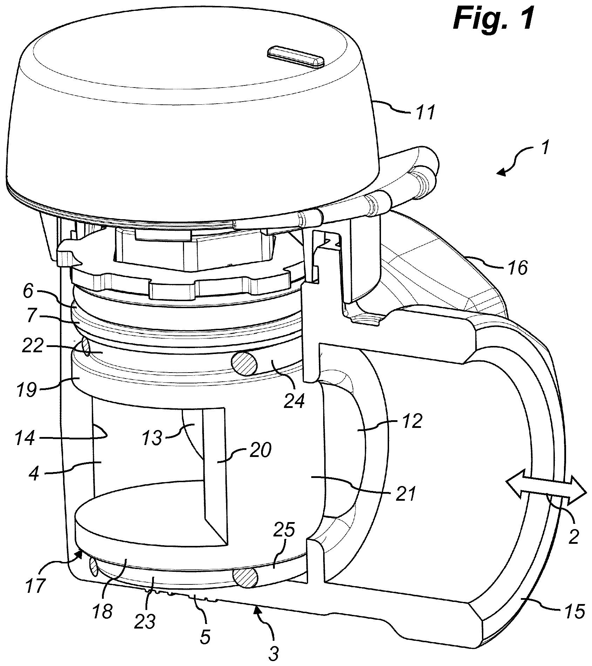

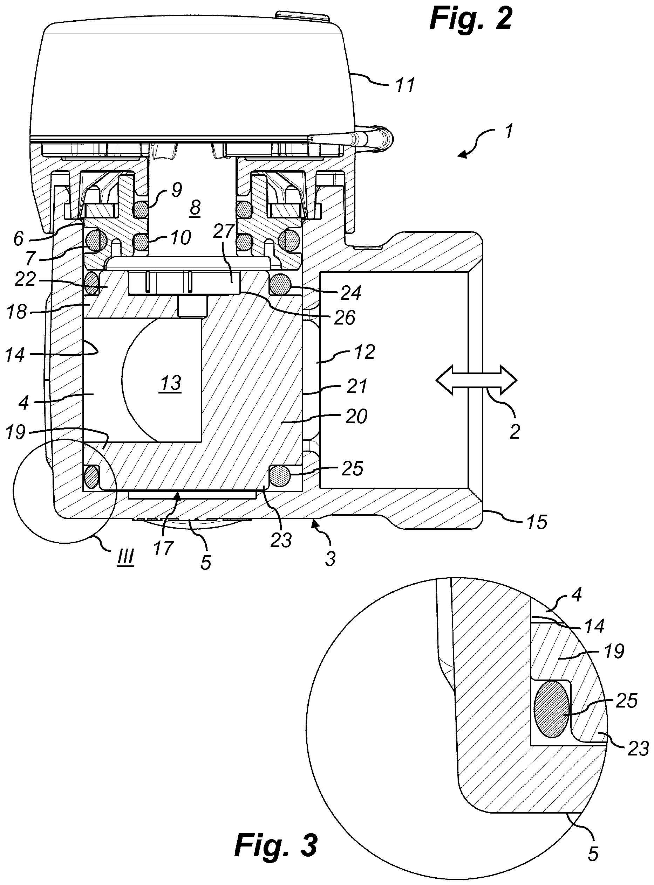

The mixing valve 1 illustrated in the drawings is intended for regulating a flow of liquid in a pipe system. The pipe system as such is symbolically illustrated in figs. 1 and 2 of the drawings by means of a double arrow 2, that also indicate possible directions of flow.

The mixing valve 1 comprises a housing 3, defining a circular cylindrical valve chamber 4. In the drawings the bottom part of the valve chamber 4 is closed by a flat housing wall 5, whereas the top part of the valve chamber 4 is closed by a circular disk 6 inserted into said top part. The disk 6 is sealed to the housing 3 by means of an O-ring 7 and serves to journal an operating spindle 8 in a leak proof way by means of two further O-rings 9, 10. The operating spindle 8 is to be connected to a knob 11 for manual valve control as shown, or to a servo unit for automatic valve control.

The valve chamber 4 of the mixing valve 1 comprises three ports 12, 13 along a circumferential chamber wall 14, only two of which are illustrated in the drawings. The three ports 12, 13 are arranged on equal height around the circumferential chamber wall 14 and are connected to the pipe system 2 mentioned above by means of connecting pieces 15, 16 of the housing 3, wherein the port missing in the drawings and the associated connecting piece in reality are situated exactly opposite to the rear port 13 in the drawings. The size of all three ports 12, 13 is such that intact parts of the circumferential chamber wall 14 remain around all three ports 12, 13.

Inside the chamber 4 of the mixing valve 1 a rotor 17 is rotatably seated. As illustrated in the drawings the overall shape of the rotor 17 is circular cylindrical with disk shaped, circular top and bottom walls 18, 19. These are connected to each other by means of a pie piece shaped column 20, that has its tip in the center of the rotor 17 and outwardly is terminated by a peripheral arc portion 21. The arc portion 21 is aligned with outer contours of the top and bottom walls 18, 19, such that a continuous wall surface is created forming part of said overall circular cylindrical shape of the rotor 17. In a circumferential direction, the arc portion 21 has a size exceeding corresponding sizes of the ports 12, 13 in the circumferential chamber wall 14 in order for the arc portion 21 to be able to totally cover one of these ports 12, 13 at a time.

The diameter of the top and bottom walls 18, 19 is slightly less (some hundredths of a millimeter) than the diameter of the valve chamber 4, which means that the rotor 17 fits freely therein.

As can be seen in the drawings, the top wall 18 comprises a circular cylindrical plateau 22 on top thereof, whereas the bottom wall 19 comprises a circular cylindrical plateau 23 underneath thereof. Said plateaus 22, 23 have diameters smaller than the top and bottom walls 18, 19 as such and are eccentrically arranged in relation thereto with centers aligned with each other and moved slightly (some tenth of a millimeter) in relation to the centers of the top and bottom walls 18, 19 as such in a direction away from said arc portion 21. The plateaus 22, 23 are adapted to hold O-rings 24, 25 used to rotatably seat the rotor 17 inside the valve chamber 4, wherein their eccentricity causes said arc portion 21 of the rotor 17 to be permanently biased into abutment against the circumferential chamber wall 14.

As shown in the drawings, the top plateau 22 has an upper groove 26, shaped to unrotatably engage with a driver 27 of said operating spindle 8 in order to enable manual or automatic control of the mixing valve 1 by rotating the rotor 17 such that the three ports 12, 13 are opened totally or partly or closed.

This far the technical features of the mixing valve 1 described above clearly fall within the scope of document WO 01/86179 A1. What makes the mixing valve 1 according to the preferred embodiment of the present invention and all other embodiments within the scope of the appendent claims really differ is that said arc portion 21 comprises means at least minimizing contact between microstructurally alike areas of said housing 3 and said rotor 17.

In the preferred embodiment this is achieved in that said housing 3 is made of a metal alloy, in that said rotor 17 is made of a metal alloy and in that said rotor 17 is made of a different metal alloy than said housing 3. In that way microstructural interaction between the metal alloys of the housing 3 and the rotor 17, or, to be more explicit, between the circumferential chamber wall 14 of the valve chamber 4 and the arc shaped portion 21 of the rotor 17, is restricted and the valve function clearly improved. One example of a preferred metal alloy combination for the housing 3 and the rotor 17 comprises different brass alloys, such as the softer CW 602 alloy for the housing 3 and the harder CW 713 alloy for the rotor 17.

It is obvious that the layout of the mixing valve 1 described above can be varied in different ways especially when it comes to the solution used to bias the rotor 17. Further, it is obvious that the number of ports 12, 13 of a mixing valve can exceed the number of three, which, however, is the most common one within the field.

The preferred embodiment described above concerns a liquid valve in the form of a mixing valve. However, the invention is not limited to liquid valves of that kind, but can be applied to shut off and diverting valves as well. Hence, a person skilled in the art realizes that the liquid valve according to the invention can be varied in multiple ways within the scope of the appendent claims both when it comes to the layout of the liquid valve as such and when it comes to the valve materials chosen.

## Claims

1. A liquid valve (1) comprising a housing (3), that defines a circular cylindrical valve chamber (4) having at least two valve ports (12, 13) along a circumferential chamber wall (14), and a rotor (17), that is rotatably seated inside said valve chamber (4) and comprises a peripheral arc portion (21) able to sealingly contact the circumferential chamber wall (14) and to totally block one of said valve ports (12, 13) in the circumferential chamber wall (14) at a time, wherein said housing (3) is made of a metal alloy, wherein said rotor (17) is made of a metal alloy, whereby the sealing contact is between metal alloys, and wherein said rotor (17) is seated in such a way inside said valve chamber (4) that said peripheral arc portion (21) of said rotor (17) is permanently biased into abutment against the circumferential chamber wall (14) of said housing (3),
**characterized in**
**that** said arc portion (21) comprises means at least minimizing the metallic contact between microstructurally alike areas of said circumferential chamber wall (14) of said housing (3) and said peripheral arc portion (21) of said rotor (17).

2. The liquid valve (1) according to claim 1, wherein said means comprises a rotor (17) made of a different metal alloy than said housing (3).

3. The liquid valve (1) according to claim 1 or 2, wherein the metal alloy of said rotor (17) is harder than the metal alloy of said housing (3).

4. The liquid valve (1) according to claim 3, wherein the metal alloy of said rotor (17) is a first brass alloy and the metal alloy of said housing (3) is a second brass alloy.

5. The liquid valve (1) according to claim 3, wherein the metal alloy of said rotor (17) is a stainless steel alloy and the metal alloy of said housing (3) is a brass alloy.

6. The liquid valve (1) according to claim 1, wherein said means comprises a rotor (17) covered by a hard coating.

7. The liquid valve (1) according to claim 1, wherein said means comprises a rotor (17) plated with a hard metal.

8. The liquid valve (1) according to any one of claims 1-7, wherein the rotor (17) has the arc portion (21) that is centrally recessed.

9. The liquid valve (1) according to claim 8, wherein said arc portion (21) is centrally recessed in an arc shaped manner.

10. The liquid valve (1) according to claim 8, wherein said arc portion (21) is centrally recessed in a planar manner.

## Patentansprüche

1. Flüssigkeitsventil (1) mit einem Gehäuse (3), das eine kreisförmige zylindrische Ventilkammer (4) mit mindestens zwei Ventilöffnungen (12, 13) entlang einer Umfangskammerwand (14) definiert, und einem Rotor (17), der drehbar in der Ventilkammer (4) sitzt und einen peripheren Bogenabschnitt (21) umfasst, der in der Lage ist dichtend mit der Umfangskammerwand (14) in Kontakt zu stehen und jeweils eine der Ventilöffnungen (12, 13) vollständig zu blockieren, wobei das Gehäuse (3) aus einer Metalllegierung hergestellt ist, wobei der Rotor (17) aus einer Metalllegierung hergestellt ist, wobei der dichtende Kontakt zwischen den Metalllegierungen vorliegt, und wobei der Rotor (17) so in der Ventilkammer (4) sitzt, dass der Bogenabschnitt (21) permanent zur Anlage gegen die Umfangskammerwand (14) des Gehäuses (3) vorgespannt ist,
**dadurch gekennzeichnet,**
**dass** der Bogenabschnitt (21) ein Mittel umfasst, das den Kontakt zwischen mikrostrukturell ähnlichen Bereichen der Umfangskammerwand (14) des Gehäuses (3) und dem Bogenabschnitt (21) des Rotors (17) zumindest minimieren.

2. Flüssigkeitsventil (1) nach Anspruch 1, wobei das Mittel einen Rotor (17) umfasst, der aus einer anderen Metalllegierung als das Gehäuse (3) hergestellt ist.

3. Flüssigkeitsventil (1) nach Anspruch 1 oder 2, wobei die Metalllegierung des Rotors (17) härter ist als die Metalllegierung des Gehäuses (3).

4. Flüssigkeitsventil (1) nach Anspruch 3, wobei die Metalllegierung des Rotors (17) eine erste Messinglegierung und die Metalllegierung des Gehäuses (3) eine zweite Messinglegierung ist.

5. Flüssigkeitsventil (1) nach Anspruch 3, wobei die Metalllegierung des Rotors (17) eine Edelstahllegierung und die Metalllegierung des Gehäuses (3) eine Messinglegierung ist.

6. Flüssigkeitsventil (1) nach Anspruch 1, wobei das Mittel einen Rotor (17) umfasst, der mit einer harten Beschichtung belegt ist.

7. Flüssigkeitsventil (1) nach Anspruch 1, wobei das Mittel einen mit einem Hartmetall plattierten Rotor (17) umfasst.

8. Flüssigkeitsventil (1) nach einem der Ansprüche 1 bis 7, wobei der Rotor (17) einen Bogenabschnitt (21) umfasst, der zentral ausgekerbt ist.

9. Flüssigkeitsventil (1) nach Anspruch 8, wobei der Bogenabschnitt (21) zentral bogenförmig ausgekerbt ist.

10. Flüssigkeitsventil (1) nach Anspruch 8, wobei der Bogenabschnitt (21) zentral planar ausgekerbt ist.

## Revendications

1. Soupape de liquide (1) comprenant un boîtier (3), qui définit une chambre de soupape cylindrique circulaire (4) ayant au moins deux orifices de soupape (12, 13) le long d'une paroi de chambre circonférentielle (14), et un rotor (17), qui est disposé de manière rotative à l'intérieur de ladite chambre de soupape (4) et comprend une partie d'arc périphérique (21) apte à entrer en contact de manière étanche avec la paroi de chambre circonférentielle (14) et de bloquer totalement un desdits orifices de soupape (12, (13) dans la paroi de chambre circonférentielle (14) à la fois, dans lequel ledit boîtier (3) est fait d'un alliage métallique, dans laquelle ledit rotor (17) est fait d'un alliage métallique, moyennant quoi le contact de manière étanche est entre les alliages métalliques et dans laquelle ledit rotor (17) est disposé d'une manière telle à l'intérieur de ladite chambre de soupape (4) que ladite partie d'arc périphérique (21) dudit rotor (17) est sollicitée en permanence en butée contre la paroi de chambre circonférentielle (14) dudit boîtier (3),
**caractérisé en ce que**
ladite partie d'arc (21) comprend un moyen pour au moins minimiser le contact métallique entre zones micro-structurellement similaires de ladite paroi de chambre circonférentielle (14) dudit boîtier (3) et de ladite partie d'arc périphérique (21) dudit rotor (17).

2. Soupape de liquide (1) selon la revendication 1, dans laquelle ledit moyen comprend un rotor (17) fait d'un alliage métallique différent de celui dudit boîtier (3).

3. Soupape de liquide (1) selon la revendication 1 ou 2, dans laquelle l'alliage métallique dudit rotor (17) est plus dur que l'alliage métallique dudit boîtier (3).

4. Soupape de liquide (1) selon la revendication 3, dans laquelle l'alliage métallique dudit rotor (17) est un premier alliage de laiton et l'alliage métallique dudit boîtier (3) est un second alliage de laiton.

5. Soupape de liquide (1) selon la revendication 3, dans laquelle l'alliage métallique dudit rotor (17) est un alliage d'acier inoxydable et l'alliage métallique dudit boîtier (3) est un alliage de laiton.

6. Soupape de liquide (1) selon la revendication 1, dans laquelle ledit moyen comprend un rotor (17) recouvert d'un revêtement dur.

7. Soupape de liquide (1) selon la revendication 1, dans laquelle ledit moyen comprend un rotor (17) plaqué avec un métal dur.

8. Soupape de liquide (1) selon l'une quelconque des revendications 1 à 7, dans laquelle le rotor (17) possède la partie d'arc périphérique qui est évidée centralement.

9. Soupape de liquide (1) selon la revendication 8, dans laquelle ladite partie d'arc (21) est évidée centralement en forme d'arc.

10. Soupape de liquide (1) selon la revendication 8, ladite partie d'arc (21) est évidée centralement de manière plane.
